Europäisches Patentamt

European Patent Office

Office européen des brevets

(19)

(11) Publication number: **0 399 678**

**A1**

(12) **EUROPEAN PATENT APPLICATION**

(21) Application number: **90304763.7**

(22) Date of filing: **01.05.90**

(51) Int. Cl.⁵: **G01F 23/00, G01D 5/16**

(30) Priority: **20.05.89 GB 8911662**

(43) Date of publication of application:
**28.11.90 Bulletin 90/48**

(84) Designated Contracting States:
**DE ES FR IT**

(71) Applicant: **DELCO ELECTRONICS OVERSEAS CORPORATION (a Delaware corp.)**
**3044 West Grand Boulevard,**
**Detroit, Michigan 48202(US)**

(72) Inventor: **Cockcroft, Clive Stuart**
**1A Larch Street**
**Southport, Merseyside PR8 6DP(GB)**

(74) Representative: **Denton, Michael John et al**
**Patent Section Vauxhall Motors Limited 1st**
**Floor Gideon House 26 Chapel Street**
**Luton Bedfordshire LU1 2SE(GB)**

(54) **Control circuit for electrical gauge.**

(57) A control circuit (10) for an electrical gauge (24) in a motor vehicle comprises a signal sender (14) having a resistance (30) which varies with the value of a variable measurable parameter for providing a signal at a signal junction (32) the value of which is directly related to the measured value of the parameter; a fixed resistor (12) connected to the signal junction and in series with the signal sender across a dc supply voltage ($V_s$); a storage controlling resistor (18) and damping capacitor (16) connected in series with one another and in parallel with the signal sender or the fixed resistor, the storage controlling resistor being connected to the signal junction, the storage controlling resistor and the damping capacitor defining a damped signal junction (34) therebetween for a damped signal which is directly related to the signal from the signal sender; and amplifier means (20,22) connected to the damped signal junction for amplifying the damped signal and connectable with the electrical gauge to drive the electrical gauge in accordance with the amplified damped signal. Provides electronic damping for the electrical gauge, thereby providing improved damping and overcoming problems associated with mechanical damping.

*Fig. 1.*

# CONTROL CIRCUIT FOR ELECTRICAL GAUGE

This invention relates to a control circuit for electrical gauges or instruments, and is applicable to electrical gauges of either the aircore (cross-coil) type or the bimetal type. This invention has particular application in motor vehicles.

It has been well known in the field of motor vehicles to have electrical gauges which provide a visual indication of the value of variable measurable parameters, such as fuel level, engine coolant temperature, engine oil pressure, etc. In these known arrangements, a signal sender is usually connected in series with the electrical gauge across a dc supply voltage. The signal sender typically has a resistance which varies with the value of the parameter being measured, and as the resistance varies, the voltage across the electrical gauge varies and hence the reading on the electrical gauge varies accordingly. The arrangement is such that the control circuit is calibrated to ensure that the electrical gauge readout corresponds to the value of the measured parameter.

In order to prevent the electrical gauge from providing a readout which is continually changing due to external factors such as vehicle vibration, etc., it has become common practice to mechanically damp the electrical gauge. This has been achieved by, for example, the use of a thick silicon paste inside the electrical gauge in aircore type gauges. This known arrangement, however, creates several problems. Firstly is the problem of stability of the electrical gauge under extreme working conditions of dc supply voltage and environment temperature. Secondly, is the assembly of the electrical gauges, and in particular the use of a very thick silicon paste. The use of heavy mechanical damping also creates problems in that it can take a noticeable amount of time for an electrical gauge to return to a steady state after fluctuation. This is particularly noticeable in electrical gauges indicating fuel level, where cornering, etc. of the motor vehicle causes the fuel level in the fuel tank to move about. Such movement can cause the fuel gauge to move very slowly between two extreme positions, before providing a correct readout. Bimetal type gauges do not usually use silicon paste for damping, but rely on the slow response of the gauge. Such gauges are however prone to sticking during fluctuating movements.

It is an object of the present invention to overcome the above mentioned problems to provide the same or increased damping without aggravating the disadvantages highlighted above.

To this end, a control circuit in accordance with the present invention comprises a signal sender having a resistance which varies with the value of a variable measurable parameter for providing a signal at a signal junction the value of which is directly related to the measured value of the parameter; a fixed resistor connected to the signal junction and in series with the signal sender across a dc supply voltage; a storage controlling resistor and damping capacitor connected in series with one another and in parallel with the signal sender or the fixed resistor, the storage controlling resistor being connected to the signal junction, the storage controlling resistor and the damping capacitor defining a damped signal junction therebetween for a damped signal which is directly related to the signal from the signal sender; and amplifier means connected to the damped signal junction for amplifying the damped signal and connectable with the electrical gauge to drive the electrical gauge in accordance with the amplified damped signal.

In this invention, the damping of the electrical gauge is provided electronically, rather than mechanically (or, in the case of bi-metal gauges - no damping at all). As will be explained below, this arrangement overcomes the above mentioned disadvantages, and provides several other advantages over the previously known arrangements.

Preferably, the amplifier means comprises an operational amplifier connected to the damped signal junction, and an integrated circuit connected to the operational amplifier for receiving the amplified damped signal therefrom and connectable with the electrical gauge. Alternatively, the amplifier means may comprise an operational amplifier connected to the damped signal junction, and a power transistor having a base connected to the operational amplifier for receiving the amplified damped signal therefrom, and an emitter and collector connectable in series with the electrical gauge across the dc supply voltage.

In the latter case, a feedback loop is preferably connected between a second input to the operational amplifier and the emitter of the power transistor for providing constant current to the electrical gauge. Alternatively, a feedback loop is connected between a second input to the operational amplifier and the collector of the power transistor for providing constant voltage across the electrical gauge.

A warning light and switching means are preferably connected in series across the dc supply voltage, with the switching means being connected to the damped signal junction, whereby when the value of the damped signal reaches or passes a predetermined level, the switching means activates the warning light. In this case, the switching means preferably comprises a voltage comparator and a switching transistor, with an input of the voltage comparator being connected to the damped signal junction, the output of the voltage comparator being connected to the base of the switching transistor, and the collector of the switching transistor being connected to the warning light.

Preferably, the storage controlling resistor and the damped capacitor are connected in series with one another, and in parallel with the signal sender. In this case, a switching device is preferably connected in series with the damping capacitor across the dc supply voltage. In this case, the switching device preferably comprises a switching transistor having an emitter and collector connected across the storage controlling resistor, and a base connected to a capacitor.

The dc supply voltage is preferably provided by a storage battery of a motor vehicle.

The control circuit of the present invention can be either formed from discrete components on a circuit board or formed integrally on a semiconductor chip.

The present invention will now be described, by way of example, with reference to the accompanying drawings, in which:-

Figure 1 is a schematic diagram of a control circuit in accordance with a first embodiment of the present invention;

Figures 2 to 4 are schematic diagrams of various modifications which can be made to the control circuit of Figure 1 either individually (as shown) or in any required combination:

Figure 5 is a schematic diagram of an alternative embodiment to that shown in Figure 2; and

Figure 6 is a schematic diagram of further modifications which can be made to the control circuit of Figure 1 either individually (as shown) or in combination with one or more of those shown in Figures 2 to 5.

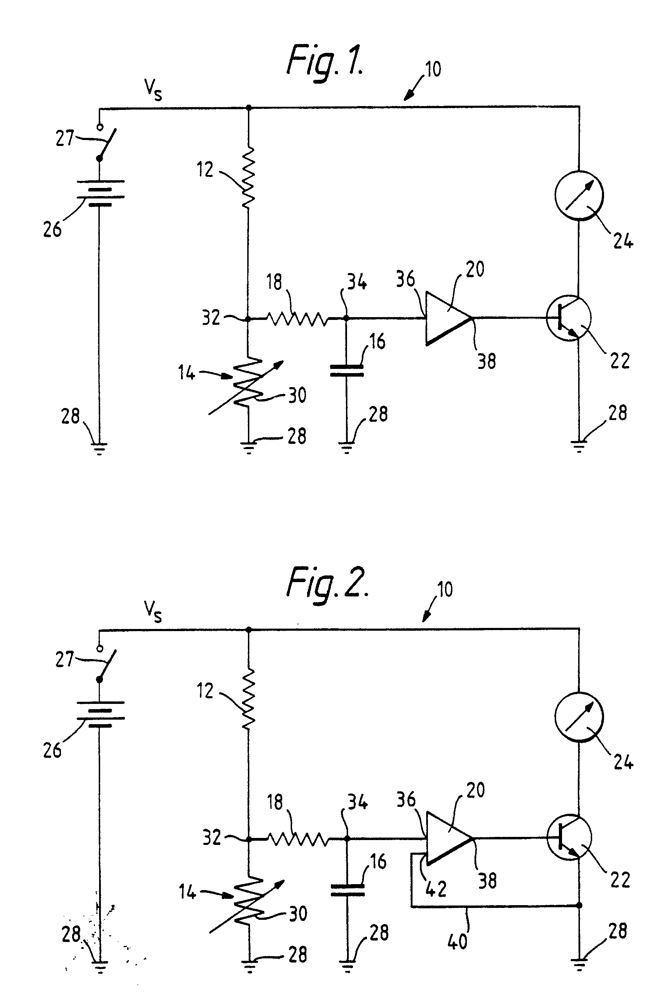

Referring to Figure 1, the control circuit 10 comprises a fixed resistor 12, a signal sender 14, a damping capacitor 16, a storage controlling resistor 18, an operational amplifier 20 and a power transistor 22 (the operational amplifier and power transistor define amplifier means). Also shown in Figure 1 is an electrical gauge 24 and a power supply 26 for supply a dc supply voltage $V_s$ for the control circuit 10 and the electrical gauge on closing of an ignition switch 27. The power supply 26 is typically a 12v storage battery of a motor vehicle. One side of the power supply 26 is connected to electrical ground 28.

The fixed resistor 12 and the signal sender 14 are connected in series as shown across the dc supply voltage $V_s$. The signal sender 14 includes a variable resistance 30 the value of which varies in accordance with the value of a variable measurable parameter which is being monitored by the signal sender. Typical examples of signal sender include a thermistor for temperature sensing, or a float arm connected to variable resistance for fuel level sensing. Such signal senders 14 are well known to those skilled in the art, and will not be described in detail. The fixed resistor 12 acts in a similar way to the resistance associated with an electrical gauge in previously known arrangements. The signal sender 14 therefore provides a signal at signal junction 32 between the signal sender and the fixed resistor 12. The signal is in the form of a voltage level, the value of which is directly related to the value of the parameter being measured.

The storage controlling resistor 18 and the damping capacitor 16 are connected in series with one another, and jointly in parallel with the signal sender 14. One end of the storage controlling resistor 18 is connected to the junction 32. The damping capacitor 16 acts to damp the signal from the signal sender 14. The storage controlling resistor 18 acts to control the storage capability of the damping capacitor 16, thereby limiting the physical size of the damping capacitor. This arrangement provides a damped signal at damped signal junction 34 between the damping capacitor 16 and the storage controlling resistor 18. The value of the damped signal at damped signal junction 34 is obviously directly related to the value of the signal at signal junction 32.

The damped signal is fed directly to an input 36 of the operational amplifier 20. The operational amplifier 20 amplifies the damped signal and provides an amplified damped signal at its output 38. The operational amplifier 20 is required to boost the signal to compensate for the storage controlling resistor 18.

The amplified damped signal is fed to the base of the power transistor 22. The collector of the power transistor 20 is connected to the electrical gauge 24, and the emitter is connected to electrical ground 28. The electrical gauge 24 is also connected to the dc supply voltage $V_s$. In effect, the emitter and collector of the power transistor 20 and the electrical gauge 24 are connected in series across the dc supply voltage $V_s$. The power transistor 20 acts like a variable resistance, the value of which is directly related to the value of the amplified damped signal on its base.

The readout on the electrical gauge 24 is therefore directly related to the signal provided by the signal sender 14 at signal junction 32, and hence directly related to the value of the parameter being measured. The damping capacitor 16 acts to electronically damp the electrical gauge 24, and hence little or no mechanical damping of the electrical gauge is required.

Nominal values for the fixed resistor 12, the storage controlling resistor 18, and the damping capacitor 16 are 50 ohms, 100 Kohms and 100 $\mu$F

respectively, although these values may be changed to suit the requirements required for a particular arrangement.

In previously known arrangements, a silicon paste having a viscosity in the range 30,000 to 200,000 cSt was required for mechanical damping, particularly on air-core type electrical gauges. From an assembly point of view, this causes considerable handling problems. With the present invention it has been found that, where additional mechanical damping is required, a silicon paste having a viscosity of only up to 4,000 cSt is required, which is far easier to handle. Further, with the requirement for heavy damping, but little or no mechanical damping, the present invention overcomes the problems associated with electrical gauge stability under extreme working conditions as previously mentioned. The present invention also provides a way for non-mechanically damping bi-metal gauges to overcome sticking.

An additional advantage of the present invention is that the signal into the electrical gauge does not have to be exactly the same as the signal output from the signal sender 14, it is only necessary to know the relationship between the two signals. The electrical gauge 24 can now be calibrated with the control circuit 10 in position using the shape of the signal from the signal sender 14, rather than the actual value. This considerably eases problems associated with the exact calibration of the electrical gauge and the signal sender as is required with the previously known arrangements.

To further enhance the stability of the electrical gauge 24, the control circuit 10 of Figure 1 can be modified as shown in Figure 2 by adding a feedback loop 40 between a second input 42 to the operational amplifier 20 and the emitter of the power transistor 22. Normally, the working current of the electrical gauge 24 is derived via Ohms Law from a combination of dc supply voltage $V_s$ and the resistance of the coil of the electrical gauge 24. By adding the feedback loop 40, the control circuit 10 provides the electrical gauge 24 with a constant current dependent only upon changes in the signal from the signal sender 14. Hence the performance of the electrical gauge 24 is independent of the coil resistance, as well as dc supply voltage $V_s$ and environmental temperature.

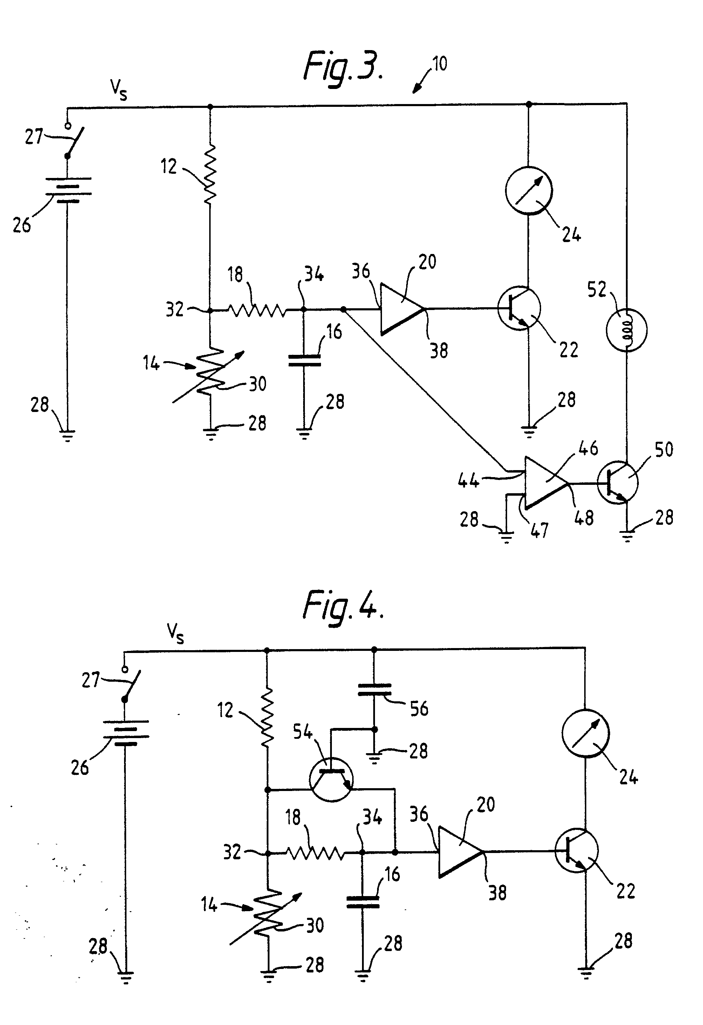

Figure 3 shows a modification of the control circuit 10 of Figure 1. In this modification, the damped signal at damped signal junction 34 is also fed to the input 44 of a voltage comparator 46. The other input 47 of the voltage comparator is connected to electrical ground 28. The output 48 of the voltage comparator 46 is fed to the base of a switching transistor 50, which has a collector and emitter connected as shown in series with a warning light 52 across the dc supply voltage $V_s$. The voltage comparator 46 monitors the value of the damped signal in comparison to electrical ground. When the value of the damped signal reaches and/or passes a predetermined level, the voltage comparator triggers an output voltage at its output 48 to activate switching transistor 50, and hence activate the warning light 52. This arrangement allows for the addition of a warning light 52 which is unaffected by the coil resistance of the electrical gauge 24, and therefore requires no calibration. The warning light 52 provides an additional warning where required, for example on high engine coolant temperature or low fuel level, as is well known.

Figure 4 shows a further modification to the control circuit 10 of Figure 1. In this modification, the emitter and collector of a second switching transistor 54 are connected across the storage controlling resistor 18 as shown. The base of the second switching transistor 54 is connected to electrical ground 28, with a capacitor 56 connected between the base and the dc supply voltage $V_s$. The second switching transistor 54 and the capacitor 56 act as a switching device to instantly charge the damping capacitor 16 on closing of the ignition switch 27. This arrangement causes the electrical gauge 24 to provide a substantially instant-neous readout of the measured value of the parameter on closing of the ignition switch 27, and hence removes the delays associated with the previously known arrangements where anything up to 5 minutes is required for an electrical gauge to provide a correct readout. This arrangement is also particularly useful for calibration purposes on an assembly line as 'down' time waiting for an electrical gauge to warm-up is eliminated.

The above described modifications in Figures 2 to 4 inclusive can be used in any required combination.

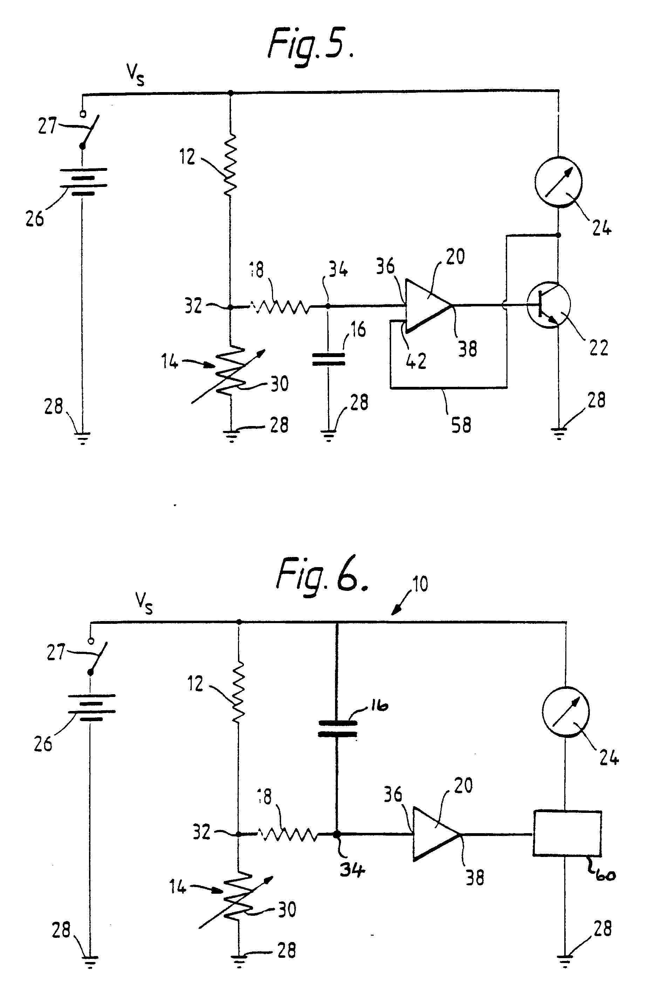

Figure 5 shows a modification to the arrangement shown in Figure 2. In this case, a feedback loop 58 is connected between the second input 42 of the operational amplifier 20 and the collector of the power transistor 22. This arrangement provides the electrical gauge 24 with a constant voltage, and hence makes the electrical gauge totally dependent on dc supply voltage $V_s$. This arrangement is suitable when the electrical gauge 24 is used as a volt meter.

Figure 6 shows further modifications which can be made to the control circuit 10 of Figure 1 (or any one or more of Figures 2 to 5). In this case, damping capacitor 16 has been moved such that the storage controlling resistor 18 and damping capacitor 16 are still in series with one another, but are jointly in parallel with the fixed resistor 12. The positioning of the damping capacitor 16 is dependent on the direction of winding of the coils (not shown) of the electrical gauge 24. Further, the power transistor has been replaced by an integrated circuit 60 having the form of a high torque or driver semiconductor chip. The integrated circuit 60 provides the same function as the power transistor 22 of Figure 1, but can also be adapted to provide signals on a sine/cosine basis, and is therefore able to drive an (air-core) electrical gauge in all four quadrants if required. In this case, the operational amplifier 20 and the integrated circuit 60 define the amplifier means.

The above described arrangements have the further advantages of eliminating inductance effects being fed from air-core type electrical gauges to the signal sender; substantially eradicating hysteresis from air-core type electrical gauges: removing problems associated with current sensitivity when the signal sender comprises a thermistor (due to the thermistor output varying with the current through it due to the coil resistance of the electrical gauge); and provides, at damped signal junction 34, a damped signal usable in other microprocessor activities on a motor vehicle, such as trip computers, etc.

It will be appreciated that the above described embodiments can be further modified. For example, the positions of the fixed resistor and the signal sender could be reversed, along with corresponding reversal of the positions of the electrical gauge and the power transistor, with suitable variations in the positioning of the other components of the control circuit, without departing from the scope of the present invention. Further still, a voltage regulator may be placed between the power supply 26 and the remainder of the control circuit 10. The voltage regulator helps to prevent the electrical gauge 24 from giving a false reading at start-up of the motor vehicle when the dc supply voltage $V_s$ may drop, and also helps to provide the substantially instantaneous readout as mentioned above with respect to Figure 4.

## Claims

1. A control circuit (10) for an electrical gauge (24) for providing a visual indication of the value of a variable measurable parameter, the control circuit comprising a signal sender (14) having a resistance (30) which varies with the value of the parameter for providing a signal at a signal junction (32) the value of which is directly related to the measured value of the parameter; characterised by a fixed resistor (12) connected to the signal junction and in series with the signal sender across a dc supply voltage ($V_s$); a storage controlling resistor (18) and damping capacitor (16) connected in series with one another and in parallel with the signal sender or the fixed resistor, the storage controlling resistor being connected to the signal junction, the storage controlling resistor and the damping capacitor defining a damped signal junction (34) therebetween for a damped signal which is directly related to the signal from the signal sender; and amplifier means (20,22,60) connected to the damped signal junction for amplifying the damped signal and connectable with the electrical gauge for driving the electrical gauge in accordance with the amplified damped signal.

2. A control circuit as claimed in Claim 1, wherein the amplifier means comprises an operational amplifier (20) connected to the damped signal junction (34), and an integrated circuit (60) connected to the operational amplifier for receiving the amplified damped signal therefrom and connectable with the electrical gauge (24).

3. A control circuit as claimed in Claim 2, wherein the amplifier means comprises an operational amplifier (20) connected to the damped signal junction, and a power transistor (22) having a base connected to the operational amplifier for receiving the amplified damped signal therefrom, and an emitter and collector connectable in series with the electrical gauge (24) across the dc supply voltage ($V_s$).

4. A control circuit as claimed in Claim 3, wherein a feedback loop (40) is connected between a second input (42) to the operational amplifier (20) and the emitter of the power transistor (22) for providing constant current to the electrical gauge (24).

5. A control circuit as claimed in Claim 3, wherein a feedback loop (58) is connected between a second input (42) to the operational amplifier (20) and the collector of the power transistor (22) for providing constant voltage across the electrical gauge (24).

6. A control circuit as claimed in any one of Claims 1 to 5, wherein a warning light (52) and switching means (46,50) are connected in series across the dc supply voltage ($V_s$), and wherein the switching means is connected to the damped signal junction (34), whereby when the value of the damped signal reaches or passes a predetermined level, the switching means activates the warning light.

7. A control circuit as claimed in Claim 6, wherein the switching means comprises a voltage comparator (46) and a switching transistor (50), an input (44) of the voltage comparator being connected to the damped signal junction (34), the output (48) of the voltage comparator being connected to the base of the switching transistor, and the collector of the switching transistor being connected to the warning light (52).

8. A control circuit as claimed in any one of Claims 1 to 7, wherein the storage controlling resistor (18) and the damped capacitor (16) are connected in series with one another, and in parallel with the signal sender (14).

9. A control circuit as claimed in Claim 8, wherein a switching device (54) is connected in series with the damping capacitor (16) across the dc supply voltage ($V_s$).

10. A control circuit as claimed in Claim 9, wherein the switching device comprises a switching transistor (54) having an emitter and collector connected across the storage controlling resistor (18), and a base connected to a capacitor (56).

11. A control circuit as claimed in any one of Claims 1 to 10, wherein the dc supply voltage ($V_s$) is provided by a storage battery (26) of a motor vehicle.

Fig.1.

Fig.2.

*Fig.3.*

*Fig.4.*

# Fig.5.

# Fig.6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-3409258 (SWF AUTO-ELECTRIC GMBH)<br>* the whole document * | 1-4,<br>6-9, 11 | G01F23/00<br>G01D5/16 |
| Y | | 5 | |
| | ---- | | |
| X | US-A-4728923 (E.P. FINGER)<br>* figure 2 * | 1, 2 | |
| | ---- | | |
| Y | PATENT ABSTRACTS OF JAPAN<br>vol. 5, no. 100 (P-068)() 27 June 1981,<br>& JP-A-56 044862 (HITACHI LTD) 24 April 1981,<br>* the whole document * | 5 | |
| | ----- | | |

|  |
|---|
| TECHNICAL FIELDS SEARCHED (Int. Cl.5 ) |
| G01D<br>G01F |

The present search report has been drawn up for all claims

| Place of search | Date of completion of the search | Examiner |
|---|---|---|
| THE HAGUE | 14 AUGUST 1990 | LUT K. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)